# EUROPEAN PATENT SPECIFICATION

(11) **EP 3 260 891 B1**
(45) Date of publication and mention of the grant of the patent: **29.11.2023**
(21) Application number: 16746567.3
(22) Date of filing: 01.02.2016
(51) Int. Cl.: G02B 1/04, C08G 18/38, C08K 5/3475, C08L 75/04, G02B 5/22, G02C 7/10, C08G 18/72, C08G 18/73, C08G 18/75, C08G 18/79, C08G 18/24

(54) **POLYMERIZABLE COMPOSITION FOR OPTICAL MATERIAL, OPTICAL MATERIAL, AND APPLICATION FOR SAME**
POLYMERISIERBARE ZUSAMMENSETZUNG FÜR OPTISCHES MATERIAL, OPTISCHES MATERIAL UND ANWENDUNG DAVON
COMPOSITION POLYMÉRISABLE POUR MATÉRIAU OPTIQUE, MATÉRIAU OPTIQUE ET SON APPLICATION

(30) Priority: 02.02.2015 JP 2015018141
(43) Date of publication of application: 27.12.2017
(73) Proprietor: Mitsui Chemicals, Inc., Tokyo 104-0028 (JP)
(72) Inventor: KAKINUMA, Naoyuki, Omuta-shi Fukuoka 836-8610 (JP); OKAZAKI, Kouju, Omuta-shi Fukuoka 836-8610 (JP)
(74) Representative: Mewburn Ellis LLP
(86) International application number: PCT/JP2016/052899
(87) International publication number: WO 2016/125736

(56) References cited:
- EP-A2- 0 698 637
- WO-A1-2012/020570
- JP-A- H0 867 813
- JP-A- H04 219 703
- JP-A- H04 219 703
- JP-A- H11 295 502
- JP-A- 2002 169 020
- JP-A- 2007 523 768
- JP-A- 2012 044 885
- JP-A- 2012 044 885
- JP-A- 2013 194 135
- US-B1- 6 187 844

## Description

### TECHNICAL FIELD

The present invention relates to a polymerizable composition for an optical material, an optical material, and a use thereof.

### BACKGROUND ART

In the related art, adverse effects due to an exposure of eyes to ultraviolet rays are regarded as a problem. Furthermore, in recent years, a blue light included in natural light or a light emitted from liquid crystal displays of office equipment and displays of portable equipment such as smartphones or mobile phones has had an influence on the eyes, causing problems such as feelings of fatigue and pain in the eyes and there is a demand to reduce an amount of exposure of the eyes to a blue light having a relatively short wavelength of approximately 420 nm from ultraviolet rays.

Non-Patent Document 1 describes an influence of the short wavelength blue light of approximately 420 nm on the eyes. In Non-Patent Document 1, damage to retinal nerve cells (cultured retinal nerve R28 cells of rats) caused by an irradiation with blue light emitting diode (LED) light having different peak wavelengths at 411 nm and 470 nm is verified. The results show that the irradiation with blue light having a peak wavelength at 411 nm (4.5 W/m²) causes a cell death of retinal nerve cells within 24 hours, whereas, for the blue light having a peak wavelength at 470 nm, changes do not occur in cells even when irradiated with the same amount, and show that suppression of an exposure of a light having a wavelength of 400 to 420 nm is important for an eye disorder prevention.

In addition, there is a concern that the exposure of the eyes to blue light for a long time will result in eyestrain and stress and this is considered to be a factor causing age-related macular degeneration.

Techniques aimed at suppressing a transmission of the blue light include the following.

Patent Document 1 discloses a plastic lens including an ultraviolet absorber and having an average light transmittance of 0.5% or less in a wavelength range of equal to or more than 300 nm and equal to or less than 400 nm.

Patent Document 2 discloses a plastic lens obtained from a composition for a plastic lens which contains a resin material which includes a urethane resin material and at least two types of ultraviolet absorbers having different maximum absorption wavelengths.

Patent Document 3 discloses a plastic lens obtainable from a composition for a plastic lens which contains a resin material which includes a urethane resin material and an ultraviolet absorber having a maximum absorption wavelength of 345 nm or more in a chloroform solution. Patent Document 3 describes that, with this plastic lens, there is no yellowing of the lens, changes in a refractive index, or the like due to the influence of the ultraviolet absorber, and furthermore, a mechanical strength of the lens is not lowered.

Patent Document 4 discloses a plastic spectacle lens using a specific benzotriazole compound. Patent Document 4 describes that the plastic spectacle lens has a light transmittance in a predetermined range at a wavelength of 395 nm, a wavelength of 400 nm, and a wavelength of 405 nm.

### RELATED DOCUMENT

### PATENT DOCUMENT

[Patent Document 1] Japanese Laid-open Patent Publication No. H10-186291
[Patent Document 2] Japanese Laid-open Patent Publication No. H11-218602
[Patent Document 3] Japanese Laid-open Patent Publication No. H11-295502
[Patent Document 4] Japanese Laid-open Patent Publication No. 2005-292240

### NON-PATENT DOCUMENT

[Non-patent Document 1] The European journal of neuroscience, vol.34, Iss.4, 548-58, (2011)

### SUMMARY OF INVENTION

### TECHNICAL PROBLEM

However, in the related art as described above, since the solubility and the like of the ultraviolet absorber in the composition are not sufficient, a productivity of a product may decrease such that dissolving an appropriate amount takes time.

On the other hand, in order to improve the productivity, it is necessary to reduce the amount of ultraviolet absorber, it is difficult to control an effect of blocking a blue light of approximately 420 nm from harmful ultraviolet rays, and there is still room for improvement in the effect.

In other words, in the related art, there is a trade-off relationship between the productivity of the products and the effect of blocking the blue light of approximately 420 nm from harmful ultraviolet rays.

### SOLUTION TO PROBLEM

It is possible to illustrate the present invention as follows.
[1] A polymerizable composition for an optical material including (A) an isocyanate compound, (B) an active hydrogen compound, and (C) one or more types of ultraviolet absorber represented by General Formula (1) and having a maximum absorption peak in a range of equal to or more than 350 nm and equal to or less than 370 nm, 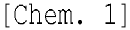 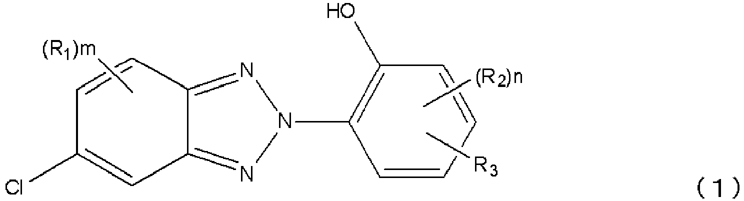 (in General Formula (1) above, R₁ and R₂ represent an alkyl group having 1 to 8 carbon atoms and may be same or different from each other, a plurality of R₁ present or a plurality of R₂ present may be same or different, m represents an integer of 0 to 3, n represents an integer of 0 to 3, and R₃ represents a functional group having 2 to 15 carbon atoms which includes an ester bond)
   wherein the isocyanate compound is at least one type selected from the group consisting of hexamethylene diisocyanate, pentamethylene diisocyanate, xylylene diisocyanate, isophorone diisocyanate, bis (isocyanatomethyl) cyclohexane, bis (isocyanatocyclohexyl) methane, 2,5-bis (isocyanatomethyl) bicyclo-[2.2.1]-heptane, 2,6-bis (isocyanatomethyl) bicyclo-[2.2.1]-heptane, tolylene diisocyanate, phenylene diisocyanate, and 4,4'-diphenylmethane diisocyanate, and
   the active hydrogen compound is a polythiol compound which is at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis (2-mercaptoacetate), pentaerythritol tetrakis (3-mercaptopropionate), 2,5-bis (mercaptomethyl)-1,4-dithiane, bis (mercaptoethyl) sulfide, 1,1,3,3-tetrakis (mercaptomethylthio) propane, 4,6-bis (mercaptomethylthio)-1,3-dithiane, 2-(2,2-bis (mercaptomethylthio) ethyl)-1,3-dithietane, 1,1,2,2-tetrakis (mercaptomethylthio) ethane, 3-mercaptomethyl-1,5-dimercapto-2,4-dithiapentane, tris (mercaptomethylthio) methane, and ethylene glycol bis (3-mercaptopropionate).
[2] The polymerizable composition for an optical material according to [1], in which the ultraviolet absorber (C) is represented by General Formula (2) below and is one or more types of ultraviolet absorber having a maximum absorption peak in a range of equal to or more than 350 nm and equal to or less than 370 nm; 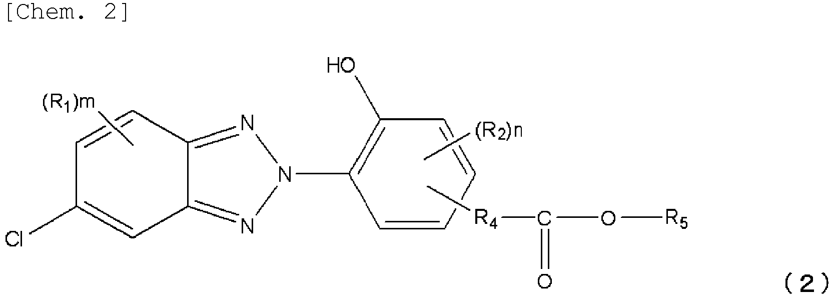 (in General Formula (2) above, R₁, R₂, m, and n have the same meanings as in General Formula (1), R₄ and R₅ independently represent a hydrocarbon group having 1 to 10 carbon atoms which may be branched) .
[3] The polymerizable composition for an optical material according to [2], in which the ultraviolet absorber (C) is represented by General Formula (3) below and is one or more types of ultraviolet absorber having a maximum absorption peak in a range of equal to or more than 350 nm and equal to or less than 370 nm; 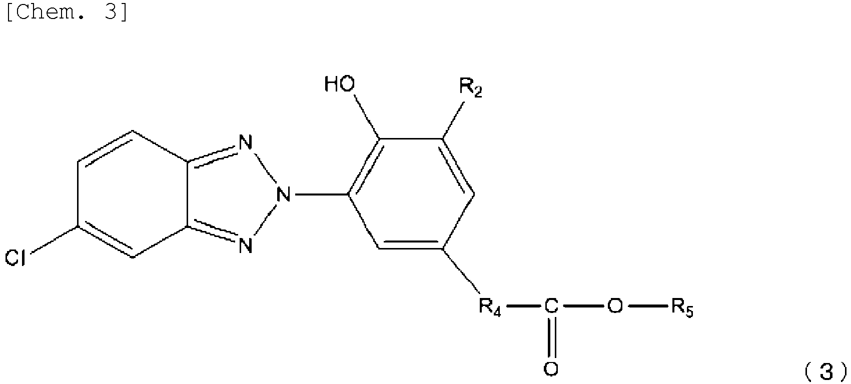 (in General Formula (3) above, R₂, R₄, and R₅ have the same meanings as in General Formula (1) or (2)).
[4] The polymerizable composition for an optical material according to any one of [1] to [3], in which the isocyanate compound (A) includes an alicyclic isocyanate compound.
[5] The polymerizable composition for an optical material according to any one of [1] to [4], further including an ultraviolet absorber having a structure other than the structure of General Formula (1) and having a maximum absorption peak in a range of equal to or more than 350 nm and equal to or less than 370 nm.
[6] The polymerizable composition for an optical material according to any one of [1] to [5], in which the ultraviolet absorber (C) is included in an amount of 0.1 to 10.0% by weight in 100% by weight of the polymerizable composition for an optical material.
[7] A molded article obtainable by curing the polymerizable composition for an optical material according to any one of [1] to [6].
[8] The molded article according to [7] including 0.1 to 10.0% by weight of the ultraviolet absorber (C).
[9] An optical material constituted of the molded article according to [7] or [8].
[10] A plastic lens formed of the optical material according to [9].
[11] A method for manufacturing an optical material, the method including a step of cast polymerizing the polymerizable composition for an optical material according to any one of [1] to [6]. [12] Use of a molded article obtainable by heating and curing the polymerizable composition for an optical material according to any one of [1] to [6] as an optical material.

### ADVANTAGEOUS EFFECTS OF INVENTION

According to the present invention, using a specific ultraviolet absorber makes it possible to provide an optical material having a high effect of blocking the blue light of approximately 420 nm from harmful ultraviolet rays, and to provide a polymerizable composition for an optical material which is also excellent in the productivity of the optical material.

Furthermore, according to the polymerizable composition for an optical material of the present invention, it is possible to provide an optical material which is colorless and transparent, excellent in an appearance, and excellent in optical characteristics such as a high refractive index and a high Abbe number and various physical properties such as a heat resistance, specifically to provide a plastic spectacle lens.

### DESCRIPTION OF EMBODIMENTS

Detailed description will be given of the present invention.

The polymerizable composition for an optical material of a present embodiment includes (A) an isocyanate compound as described in further detail below, (B) an active hydrogen compound as described in further detail below, and (C) one or more types of ultraviolet absorber represented by General Formula (1) and having a maximum absorption peak in the range of equal to or more than 350 nm and equal to or less than 370 nm. 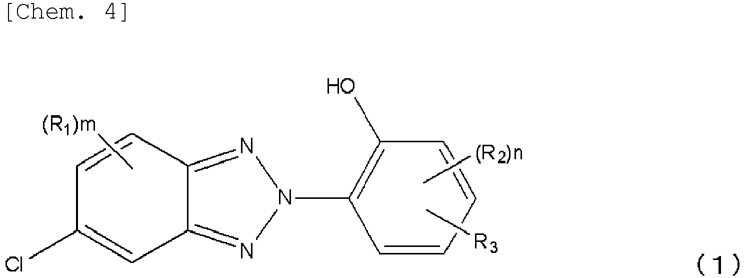 (In General Formula (1) above, R₁ and R₂ represent an alkyl group having 1 to 8 carbon atoms and may be same or different from each other, a plurality of R₁ present or a plurality of R₂ present may be same or different, m represents an integer of 0 to 3, n represents an integer of 0 to 3, and R₃ represents a functional group having 2 to 15 carbon atoms which includes an ester bond.)

Each component will be described in detail below.

In the present embodiment, from the viewpoint of improving a transparency of the optical material obtainable using the polymerizable composition for an optical material, the isocyanate compound (A) preferably includes an alicyclic isocyanate compound.

In addition, from the viewpoint of improving the transparency of the optical material obtainable using the polymerizable composition for an optical material, the total content of the aromatic isocyanate and heterocyclic isocyanate with respect to the whole isocyanate compound (A) is preferably 50% by weight or less, more preferably 30% by weight or less, even more preferably 10% by weight or less, and even more preferably substantially 0% by weight.

### [(A) Isocyanate Compound]

The isocyanate compound (A) is at least one type selected from hexamethylene diisocyanate, pentamethylene diisocyanate, xylylene diisocyanate, isophorone diisocyanate, bis (isocyanatomethyl) cyclohexane, bis (isocyanatocyclohexyl) methane, 2,5-bis (isocyanatomethyl) bicyclo-[2.2.1]-heptane, 2,6-bis (isocyanatomethyl) bicyclo-[2.2.1]-heptane, tolylene diisocyanate, phenylene diisocyanate, and 4,4'-diphenylmethane diisocyanate.

From the viewpoint of improving the optical characteristics of the optical material obtainable using the polymerizable composition for an optical material, the content of the isocyanate compound (A) in the polymerizable composition for an optical material is preferably 30% by weight or more in 100% by weight of the polymerizable composition for an optical material, and more preferably 40% by weight or more, and preferably 70% by weight or less, and more preferably 60% by weight or less.

### [(B) Active Hydrogen Compound]

In the present embodiment, the polymerizable composition for an optical material includes an active hydrogen compound that is a polythiol compound having two or more mercapto groups, which is at least one type selected from the group given below.

The polythiol compound is at least one type selected from 5,7-dimercaptomethyl-1,11-dimercapto-3,6,9-trithiaundecane, 4,7-dimercaptomethyl-1,11-dimercapto-3,6,9 trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis (2-mercaptoacetate), pentaerythritol tetrakis (3-mercaptopropionate), 2,5-bis (mercaptomethyl)-1,4-dithiane, bis (mercaptoethyl) sulfide, 1,1,3,3-tetrakis (mercaptomethylthio) propane, 4,6-bis (mercaptomethylthio)-1,3-dithiane, 2-(2,2-bis (mercaptomethylthio) ethyl)-1,3-dithietane, 1,1,2,2 tetrakis (mercaptomethylthio) ethane, 3-mercaptomethyl-1,5-dimercapto-2,4-dithiapentane, tris (mercaptomethylthio) methane, and ethylene glycol bis (3-mercaptopropionate) . (2,6-diethyl-3-chloroaniline).

Diaminotoluenes such as diethyltoluenediamine (DETDA) are also suitable.

From the viewpoint of improving the optical characteristics of the optical material obtainable using the polymerizable composition for an optical material, the active hydrogen compound (B) is preferably at least one type selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, and pentaerythritol tetrakis (3-mercaptopropionate).

From the viewpoint of improving the optical characteristics of the optical material obtainable using the polymerizable composition for an optical material, the content of the active hydrogen compound (B) in the polymerizable composition for an optical material is preferably 30% by weight or more in 100% by weight of the polymerizable composition for an optical material, and more preferably 40% by weight or more, and preferably 70% by weight or less, and more preferably 60% by weight or less.

### [Ultraviolet Absorber (C)]

The ultraviolet absorber (C) used in the present embodiment is represented by General Formula (1) below and is one type or more of ultraviolet absorber having a maximum absorption peak in the range of equal to or more than 350 nm and equal to or less than 370 nm when dissolved in a chloroform solution.

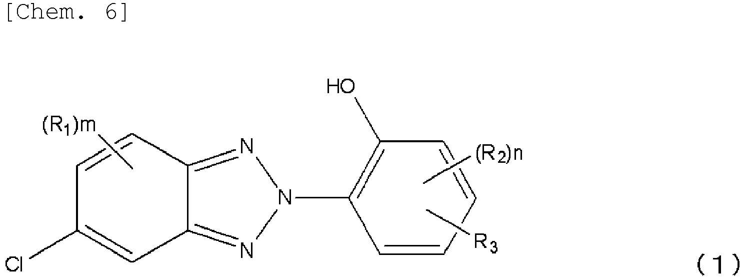

In General Formula (1), R₁ and R₂ represent an alkyl group with 1 to 8 carbon atoms, preferably an alkyl group with 2 to 6 carbon atoms, which may be same or different. A plurality of R₁s present or a plurality of R₂s present may be same or different.

m represents an integer of 0 to 3, preferably 0 or 1.

n represents an integer of 0 to 3, preferably 1 or 2.

R₃ represents a functional group with 2 to 15 carbon atoms including an ester bond, preferably -R₄-C(=O)OR₅ or -R₄-OC(=O)-R₅, and more preferably -R₄-C(=O)OR₅. R₄ and R₅ independently represent a hydrocarbon group with 1 to 10 carbon atoms which may be branched. More specifically, R₄ represents a divalent hydrocarbon group with 1 to 10 carbon atoms which may be branched, and R₅ represents a monovalent hydrocarbon group with 1 to 10 carbon atoms which may be branched.

Using such an ultraviolet absorber (C) makes it possible to provide an optical material having a high effect of blocking the blue light of approximately 420 nm from harmful ultraviolet rays, and also excellent in an optical material productivity.

From the viewpoint of the effect of the present invention, it is possible to preferably use one type or more of ultraviolet absorbers selected from compounds represented by General Formula (2) below as the ultraviolet absorber (C). More preferably, the ultraviolet absorber (C) is one type or more of ultraviolet absorber which is a compound represented by General Formula (2) and has a maximum absorption peak in the range of equal to or more than 350 nm and equal to or less than 370 nm.

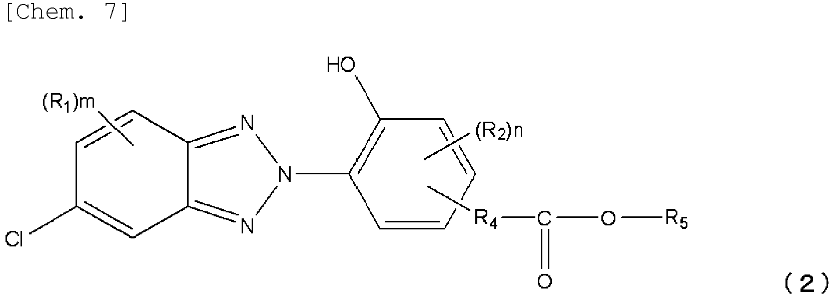

In General Formula (2), R₁, R₂, m, and n have the same meanings as in General Formula (1).

R₄ represents a hydrocarbon group with 1 to 10 carbon atoms which may be branched, preferably an alkylene group with 1 to 5 carbon atoms which may be branched.

R₅ represents a hydrocarbon group with 1 to 10 carbon atoms which may be branched, preferably an alkyl group with 3 to 10 carbon atoms which may be branched.

From the viewpoint of the effects of the present invention, it is possible to even more preferably use one type or more of ultraviolet absorbers selected from the compounds represented by General Formula (3) below as the ultraviolet absorber (C). Even more preferably, the ultraviolet absorber (C) is one type or more of an ultraviolet absorber which is a compound represented by General Formula (3) and has a maximum absorption peak in the range of equal to or more than 350 nm and equal to or less than 370 nm.

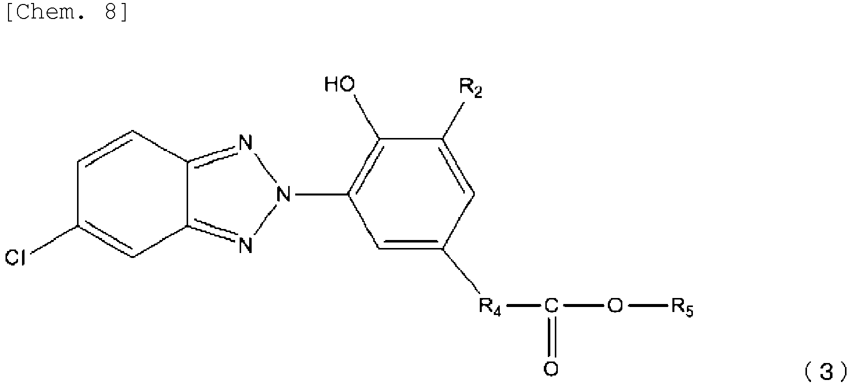

In General Formula (3), R₂, R₄, and R₅ have the same meanings as in General Formula (1) or (2).

In the present embodiment, it is possible to further preferably use one type or more selected from isomers of the compounds represented by the following chemical formula as the ultraviolet absorber (C) .

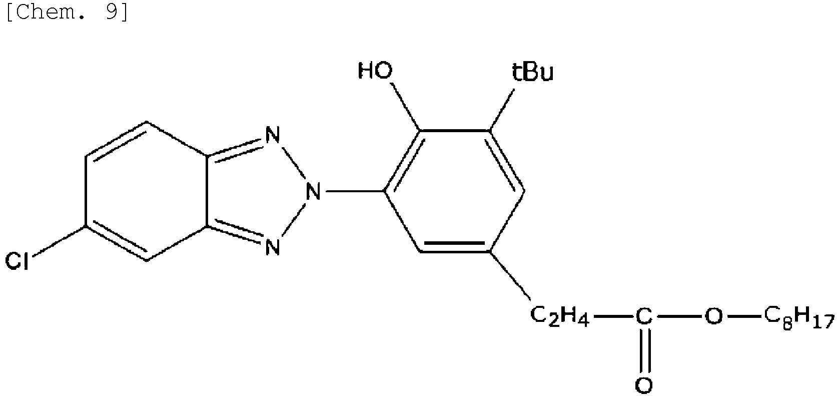

Examples of the ultraviolet absorber (C) include a mixture of 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] propionate 2-ethyl hexyl, and the like, and it is possible to use EVERSORB 109 (produced by EVER LIGHT) and the like.

From the viewpoint of the effects of the present invention, it is possible to include the ultraviolet absorber (C) in an amount of 0.1 to 10.0% by weight in 100% by weight of the polymerizable composition for an optical material, and preferably 0.5 to 7.5% by weight. In addition, from the same viewpoint, the content of the ultraviolet absorber (C) in 100% by weight of the polymerizable composition for an optical material is preferably 0.1% by weight or more, more preferably 0.5% by weight or more, and, preferably 10.0% by weight or less, and more preferably 7.5% by weight or less. The ultraviolet absorber (C) is excellent in solubility and dispersibility in the isocyanate compound (A) and the active hydrogen compound (B), and is able to be easily added by mixing and stirring with the above.

Since the ultraviolet absorber (C) is excellent in solubility and dispersibility in the isocyanate compound (A) and the active hydrogen compound (B), it is possible to obtain a homogeneous polymerizable composition in a short time, and the productivity is excellent.

Furthermore, since the solubility and dispersibility are excellent, it is possible to add a large amount of the ultraviolet absorber (C) and, even if added in a large amount, the ultraviolet absorber (C) does not bleed out from the optical material, thus white turbidity and the like are unlikely to occur. Accordingly, using the ultraviolet absorber (C) makes it possible to easily control the wavelength cut according to the addition amount, and to provide an optical material having high effect of blocking the blue light of approximately 420 nm from harmful ultraviolet rays.

In the present embodiment, from the viewpoint of improving the balance between the effect of improving the productivity of the product and the effect of blocking the blue light of approximately 420 nm from harmful ultraviolet rays, specific examples of combinations of the isocyanate compound (A), the active hydrogen compound (B), and the ultraviolet absorber (C) are as follows. Preferable examples of the isocyanate compound (A) include at least one type selected from the group consisting of isophorone diisocyanate, bis (isocyanatocyclohexyl) methane, 2,5-bis (isocyanatomethyl) bicyclo-[2.2.1]-heptane, and 2,6-bis (isocyanatomethyl) bicyclo-[2.2.1]-heptane;
preferable examples of the active hydrogen compound (B) include at least one type selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, and pentaerythritol tetrakis (3-mercaptopropionate);
the ultraviolet absorber (C) is preferably at least one type selected from the compounds represented by General Formula (2) above, more preferably at least one type selected from the compounds represented by General Formula (3) above, and even more preferably at least one type selected from 3-[3-tert-butyl-5-(5-chloro-2H-benzotriazol-2-yl)-4-hydroxypheny l] octyl propionate, and
3-[3-tert-butyl-5-(5-chloro-2H-benzotriazol-2-yl)-4-hydroxypheny l] propionate 2-ethyl hexyl.

In the present embodiment, other ultraviolet absorbers may be included in addition to the ultraviolet absorber (C). Examples thereof include benzophenone-based compounds, triazine compounds, benzotriazole-based compounds, and the like.

Examples of benzophenone-based compounds include 2,2'-dihydroxy-4,4'-dimethoxybenzophenone, 2,2'-4,4'-tetrahydroxybenzophenone, and the like.

Examples of triazine compounds include ADK STAB LA-F70 produced by ADEKA Corp., TINUVIN 400 produced by BASF Corp., and the like.

In addition, the other ultraviolet absorber is preferably an ultraviolet absorber having a structure other than General Formula (1) and having a maximum absorption peak in a range of equal to or more than 350 nm and equal to or less than 370 nm.

In the present embodiment, a benzotriazole-based compound is preferably used, and examples of benzotriazole-based compounds include a linear alkyl ester-substituted benzotriazole-based compound, a chloro-substituted benzotriazole-based compound, and the like.

Among these, chloro-substituted benzotriazole-based compounds represented by General Formula (5) below are preferable.

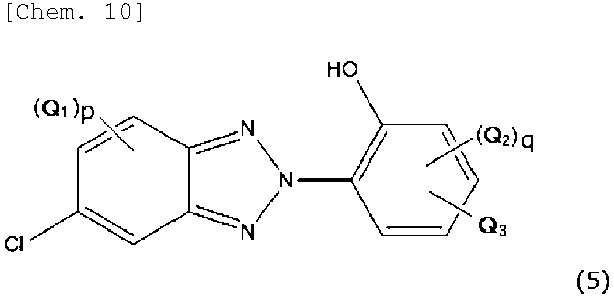

In General Formula (5), Q₁ and Q₂, may be the same or different and represent an alkyl group having 1 to 8 carbon atoms, and preferably an alkyl group having 2 to 6 carbon atoms. A plurality of Q₁s present or a plurality of Q₂s present may be the same or different. p is an integer of 0 to 3, and q is an integer of 0 to 3. Q₃ represents an alkyl group having 1 to 5 carbon atoms.

Among the compounds represented by General Formula (5), it is preferable to use an ultraviolet absorber having a maximum absorption peak in a range of equal to or more than 350 nm and equal to or less than 370 nm, and examples thereof include 2-(2-hydroxy-3-t-butyl-5-methylphenyl)-chlorobenzotriazole. As commercially available products, it is possible to use TINUVIN 326 produced by BASF Corp., SEESEORB 703 produced by SHIPRO KASEI KAISHA, LTD., Viosorb 550 produced by KYODO CHEMICAL CO., LTD., KEMISORB 73 produced by CHEMIPRO KASEI, and the like.

From the viewpoint of the effect of the present invention, the mixing ratio of the ultraviolet absorber (C) and the other ultraviolet absorber is 99/1 to 1/99, preferably 95/5 to 5/95, more preferably 90/10 to 10/90, and even more preferably 80/20 to 20/80.

In addition, in the present embodiment, from the viewpoint of improving the effect of blocking the blue light of approximately 420 nm from harmful ultraviolet rays, specific examples of combinations of the ultraviolet absorber (C) and other ultraviolet absorbers are as follows. The ultraviolet absorber (C) is preferably at least one type selected from the compounds represented by General Formula (2) above, more preferably one type or more of compound selected from the compounds represented by General Formula (3) above, and even more preferably at least one type selected from 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] propionate 2-ethylhexyl;
while preferable examples of other ultraviolet absorbers include benzotriazole-based compounds, more preferably at least one type selected from the group consisting of a linear alkyl ester-substituted benzotriazole-based compound and a chloro-substituted benzotriazole-based compound, even more preferably at least one type selected from chloro-substituted benzotriazole-based compounds represented by General Formula (5) above, and still more preferably 2-(2-hydroxy-3-t-butyl-5-methylphenyl)-chlorobenzotriazole.

In the present embodiment, using the ultraviolet absorber (C) represented by General Formula (1) in combination with another ultraviolet absorber further improves the effect of blocking the blue light of approximately 420 nm from harmful ultraviolet rays and makes it possible to obtain a synergistic effect.

In the present embodiment, the molar ratio of the active hydrogen group in the active hydrogen compound (B) to the isocyanato group in the isocyanate compound (A) is in the range of 0.8 to 1.2, preferably in the range of 0.85 to 1.15, and more preferably in the range of 0.9 to 1.1. Within the ranges described above, it is possible to obtain a resin suitably used as an optical material, specifically as a plastic lens material for spectacles.

### (Other Components)

The polymerizable composition for an optical material of the present embodiment may further include a polymerization catalyst, an internal release agent, a resin modifier, a photostabilizer, a bluing agent, and the like as other components.

### (Catalyst)

Examples of catalysts include Lewis acid, amines, organic acids, amine organic acid salts, and the like, preferably Lewis acid, amines, and amine organic acid salts, and more preferably dimethyl tin chloride, dibutyl tin chloride, and dibutyl tin laurate.

### (Internal Release Agent)

As the internal release agent, it is possible to use an acidic phosphate ester. Possible examples of acidic phosphate esters include phosphate monoesters and phosphate diesters, which are able to be used alone or in a combination of two or more types. For example, it is possible to use ZelecUN produced by STEPAN Company, an internal mold release agent for MR produced by Mitsui Chemicals, Inc., JP series produced by Johoku Chemical Co., Ltd., Phosphanol series produced by Toho Chemical Industry Co., Ltd., AP, DP Series produced by Daihachi Chemical Industry Co., Ltd., and the like.

### (Resin Modifier)

In the polymerizable composition for an optical material of the present embodiment, it is possible to add the resin modifier within a range not impairing the effect of the present invention for the purpose of controlling various physical properties such as optical characteristics, impact resistance, and specific gravity of the obtainable resin and adjusting the handleability of the polymerizable composition.

Examples of resin modifiers include episulfide compounds, alcohol compounds, amine compounds, epoxy compounds, organic acids and anhydrides thereof, olefin compounds including (meth)acrylate compounds or the like, and the like.

### (Photostabilizer)

As the photostabilizer, it is possible to use a hindered amine-base compound. Examples of hindered amine-based compounds include Lowilite 76 and Lowilite 92 produced by Chemtura Corp., Tinuvin 144, Tinuvin 292, Tinuvin 765 produced by BASF Corp., ADK STAB LA-52 and LA-72 produced by ADEKA Corp., JF-95 produced by Johoku Chemical Co., Ltd., and the like.

### (Bluing Agent)

Examples of bluing agents include bluing agents having an absorption band in the orange to yellow wavelength range of the visible light region and having a function of adjusting a hue of an optical material formed of a resin. More specifically, the bluing agent includes a substance exhibiting a blue to purple color.

It is possible to obtain the polymerizable composition for an optical material by mixing the isocyanate compound (A), the active hydrogen compound (B), the ultraviolet absorber (C) by a predetermined method with other thiol compounds, catalysts, internal release agents, and other additives as necessary.

The temperature during mixing is usually 25°C or less. From the viewpoint of the pot life of the polymerizable composition for an optical material, it may be preferable to further lower the temperature. However, in a case where the solubility of the catalyst, the internal mold release agent and the additive in the isocyanate compound (A) or the active hydrogen compound (B) is not favorable, it is also possible to dissolve the above by warming in advance.

A mixing order and a mixing method of each component in the composition are not limited as long as it is possible to uniformly mix each component and to carry out the mixing by a known method. As a known method, there is, for example, a method of preparing a master batch including predetermined amounts of additives and dispersing and dissolving the master batch in a solvent.

### <Molded Article>

In the present embodiment, the method for manufacturing the molded article is not limited; however, preferable examples of a manufacturing method include casting polymerization. First, a polymerizable composition for an optical material is injected between molded molds held by a gasket, a tape, or the like. At this time, depending on the physical properties required for the plastic lens to be obtained, as necessary, it is often preferable to carry out a defoaming treatment under reduced pressure, filtration treatment such as pressurization, depressurization, or the like.

The polymerization conditions are not limited because the conditions are largely different depending on the polymerizable composition for an optical material, the type and amount of catalyst used, the shape of the mold, and the like; however, the conditions are approximately 1 to 50 hours at a temperature of -50 to 150°C. In some cases, it is preferable to hold or gradually raise the temperature in a range of 10 to 150°C so as to carry out curing over 1 to 25 hours.

The molded article of the present embodiment may be subjected to a treatment such as annealing as necessary. The treatment temperature is usually in the range of 50 to 150°C, but the treatment is preferably carried out at 90 to 140°C, and more preferably 100 to 130°C.

It is possible to obtain the molded article of the present embodiment as molded articles of various shapes by changing the mold during casting polymerization.

In addition, the molded article of the present embodiment is obtainable by curing, for example, the polymerizable composition for an optical material.

In addition, in the present embodiment, it is possible to use a molded article obtainable by heat curing the polymerizable composition for an optical material as, for example, an optical material.

The molded article of the present embodiment is colorless and transparent, excellent in appearance, excellent in optical characteristics such as a high refractive index and a high Abbe number and various physical properties such as heat resistance, and the molded article is able to be used as various optical materials by being formed into a desired shape and provided with a coat layer to be formed as necessary, other members, and the like.

From the viewpoint of improving the effect of blocking the blue light of approximately 420 nm from harmful ultraviolet rays, the content of the ultraviolet absorber (C) included in the molded article is preferably 0.1% by weight or more, and more preferably 0.5% by weight or more and preferably 10.0% by weight or less, and more preferably 7.5% by weight or less.

In addition, it is possible for the molded article of the present embodiment to include the ultraviolet absorber (C) as 0.1 to 10.0% by weight, and preferably 0.5 to 7.5% by weight. Due to this, the effect of blocking the blue light of approximately 420 nm from harmful ultraviolet rays is excellent.

### <Optical Material>

Examples of the optical material of the present embodiment include a plastic lens, a camera lens, a light emitting diode (LED), a prism, an optical fiber, an information recording substrate, a filter, a light emitting diode, and the like. Specifically, the optical material of the present embodiment is suitable as an optical material or an optical element such as a plastic lens, a camera lens, a light emitting diode, and the like.

The plastic lens using the molded article of the present embodiment may be used by applying a coating layer on one side or both sides as necessary. Examples of coating layers include a primer layer, a hard coat layer, an anti-reflection film layer, an anti-fog coating film layer, an anti-fouling layer, a water-repellent layer, and the like. It is also possible for each of these coating layers to be used alone, or a plurality of coating layers are able to be used in multiple layers. In a case of applying coating layers on both sides, the same coating layer may be applied to each side or different coating layers may be applied to each side.

These coating layers may each contain a combination of an infrared absorber for the purpose of protecting eyes from infrared rays, a photostabilizer and an anti-oxidant for the purpose of improving the weather resistance of the lens, a dye and a pigment for the purpose of increasing the fashionability of the lens, a photochromic dye or a photochromic pigment, an anti-static agent, and other known additives for enhancing the performance of the lens. A coating layer or a primer layer such as a hard coat or an anti-reflection coat may be provided.

The plastic lens using the molded article of the present embodiment may be used after being dyed for the purpose of imparting fashionability, a photochromic property, or the like using a coloring material according to the purpose. It is possible to carry out the dyeing of the lens by a known dyeing method.

In addition, the method for manufacturing the optical material of the present embodiment includes, for example, a step of cast polymerizing the polymerizable composition for an optical material of the present embodiment.

Although the present invention has been described based on the present embodiment, it is possible to adopt various configurations within a range not impairing the effects of the present invention.

### [Examples]

Description will be given below of the present invention in more detail with reference to examples, but the present invention is not limited thereto. The evaluation methods in the examples of the present invention are as follows.

### <Evaluation Method>

### • Dissolution Completion Time of Ultraviolet Absorber

In the Examples, the time of complete dissolution after adding the isocyanate solution to various additives including the ultraviolet absorber was visually confirmed.

### • Light Transmittance

The UV-visible light spectrum was measured using a 2 mm thick plano lens and as a measuring device using Shimadzu spectrophotometer UV-1600 produced by Shimadzu Corp., and the transmittance at specific wavelengths (410 nm, 420 nm, and 440 nm) was measured.

### • Measurement of Refractive Index and Abbe Number

Measurement was carried out at 20°C using a Pulfrich refractometer KPR-30 produced by Shimadzu Corp.

### • Heat Resistance (Measurement of Glass Transition Temperature (Tg))

Measurement was carried out with a thermal mechanical analyzer TMA-60 produced by Shimadzu Corp. according to the TMA penetration method (with a load of 50 g, a pin tip of 0.5 mmφ, a temperature increase rate of 10°C/min).

### <Maximum Absorption Peak of Ultraviolet Absorber>

The maximum absorption peak of the ultraviolet absorber used in the Examples was as follows.

Measurement method: The ultraviolet-visible light spectrum was measured using a 2 mm thick plano lens and using a Shimadzu spectrophotometer UV-1600 produced by Shimadzu Corp. as a measuring device.

EVERSORB 109: The maximum absorption peak was present in the range of equal to or more than 350 nm and equal to or less than 370 nm.

TINUVIN 326 : The maximum absorption peak was present in the range of equal to or more than 350 nm and equal to or less than 370 nm.

### [Example 1]

A homogeneous solution was obtained by stirring and mixing 0.1 parts by weight of ZelecUN (produced by STEPAN), 1.5 parts by weight of a mixture (EVERSORB 109 produced by EVER LIGHT) of 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] propionate 2-ethyl hexyl and 58.9 parts by weight of bis(4-isocyanatocyclohexyl) methane at 20°C. A mixed solution was obtained by adding 41.1 parts by weight of a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane and 0.15 parts by weight of dibutyltin (II) dichloride to the above homogeneous solution and stirring and mixing at 20°C. After this mixed solution was defoamed at 600 Pa for 1 hour and filtrated with a 1 um PTFE filter, the mixed solution was introduced into a mold formed of a 2C (curve, the same applies below) plano glass mold with a center thickness of 2 mm and a diameter of 80 mm and a flat glass mold with a center thickness of 2 mm and a diameter of 78 mm. This mold was placed in a polymerization oven and polymerization was carried out by gradually raising the temperature from 20°C to 130°C over 21 hours. After completion of the polymerization, the mold was removed from the oven. The obtained plano lens was further annealed at 130°C for 2 hours. The obtained 2 mm thick plano lens had a transparency and had a refractive index (ne) of 1.60, an Abbe number (ve) of 39, and a heat resistance of 125°C, which was suitable as a transparent resin for an optical material. The ultraviolet-visible light spectrum of the obtained plano lens was measured using a spectrophotometer UV-1600 (produced by Shimadzu Corp.). The evaluation results are shown in Table 1.

### [Example 2]

A 2 mm thick plano lens was obtained by the same method as Example 1 except that 1.50 parts by weight of the mixture (EVERSORB 109 produced by EVER LIGHT) of 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] propionate 2-ethyl hexyl was changed to 3.00 parts by weight. The obtained plano lens had a transparency and had a refractive index (ne) of 1.60, an Abbe number (ve) of 39, and a heat resistance of 122°C, and was suitable as a transparent resin for optical materials. The ultraviolet-visible light spectrum of the obtained plano lens was measured using a spectrophotometer UV-1600 (produced by Shimadzu Corp.). The evaluation results are shown in Table 1.

### [Example 3]

A 2 mm thick plano lens was obtained by the same method as Example 1 except that 1.50 parts by weight of the mixture (EVERSORB 109 produced by EVER LIGHT) of 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] propionate 2-ethyl hexyl was changed to 5.00 parts by weight. The obtained plano lens had a transparency and had a refractive index (ne) of 1.60, an Abbe number (ve) of 39, and a heat resistance of 117°C, and was suitable as a transparent resin for optical materials. The ultraviolet-visible light spectrum of the obtained plano lens was measured using a spectrophotometer UV-1600 (produced by Shimadzu Corp.). The evaluation results are shown in Table 1.

### [Example 4]

A homogeneous solution was obtained by stirring and mixing 0.1 parts by weight of ZelecUN (produced by STEPAN), 0.6 parts by weight of 2-(2-hydroxy-3-t-butyl-5-methylphenyl)-chlorobenzotriazole (TINUVIN 326 produced by BASF Corp.), 1.5 parts by weight of a mixture (EVERSORB 109 produced by EVER LIGHT) of 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] propionate 2-ethyl hexyl and 58.9 parts by weight of bis(4-isocyanatocyclohexyl) methane at 20°C. A mixed solution was obtained by adding 41.1 parts by weight of a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane and 0.15 parts by weight of dibutyltin (II) dichloride to the above homogeneous solution and stirring and mixing at 20°C. After this mixed solution was defoamed at 600 Pa for 1 hour and filtrated with a 1 µm PTFE filter, the mixed solution was introduced into a mold. This mold was placed in a polymerization oven and polymerization was carried out by gradually raising the temperature from 20°C to 130°C over 21 hours. After completion of the polymerization, the mold was removed from the oven. The obtained plano lens was further annealed at 130°C for 2 hours. The obtained 2 mm thick plano lens had a transparency and had a refractive index (ne) of 1.60, an Abbe number (ve) of 39, and a heat resistance of 123°C, and was suitable as a transparent resin for optical materials. The ultraviolet-visible light spectrum of the obtained plano lens was measured using a spectrophotometer UV-1600 (produced by Shimadzu Corp.). The evaluation results are shown in Table 1.

### [Example 5]

A 2 mm thick plano lens was obtained by the same method as Example 4 except that 1.50 parts by weight of the mixture (EVERSORB 109 produced by EVER LIGHT) of 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] propionate 2-ethyl hexyl was changed to 2.00 parts by weight. The obtained plano lens had a transparency and had a refractive index (ne) of 1.60, an Abbe number (ve) of 39, and a heat resistance of 122°C, and was suitable as a transparent resin for optical materials. The ultraviolet-visible light spectrum of the obtained plano lens was measured using a spectrophotometer UV-1600 (produced by Shimadzu Corp.). The evaluation results are shown in Table 1.

### [Example 6]

A 2 mm thick plano lens was obtained by the same method as Example 4 except that 1.50 parts by weight of the mixture (EVERSORB 109 produced by EVER LIGHT) of 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] propionate 2-ethyl hexyl was changed to 5.00 parts by weight. The obtained plano lens had a transparency and had a refractive index (ne) of 1.60, an Abbe number (ve) of 39, and a heat resistance of 117°C, and was suitable as a transparent resin for optical materials. The ultraviolet-visible light spectrum of the obtained plano lens was measured using a spectrophotometer UV-1600 (produced by Shimadzu Corp.). The evaluation results are shown in Table 1.

### [Example 7]

A homogeneous solution was obtained by stirring and mixing 0.1 parts by weight of ZelecUN (produced by STEPAN), 1.5 parts by weight of a mixture (EVERSORB 109 produced by EVER LIGHT) of 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] octyl propionate 2-ethyl hexyl and 56.1 parts by weight of isophorone diisocyanate at 20°C. A mixed solution was obtained by adding 43.9 parts by weight of 4-mercaptomethyl-1,8-dimercapto-3,6-dithiaoctane and 0.20 parts by weight of dimethyltin (II) dichloride to the above homogeneous solution and stirring and mixing at 20°C. After this mixed solution was defoamed at 600 Pa for 1 hour and filtrated with a 1 um PTFE filter, the mixed solution was introduced into a mold formed of a 2C plano glass mold with a center thickness of 2 mm and a diameter of 80 mm and a flat glass mold with a center thickness of 2 mm and a diameter of 78 mm. This mold was placed in a polymerization oven and polymerization was carried out by gradually raising the temperature from 20°C to 130°C over 21 hours. After completion of the polymerization, the mold was removed from the oven. The obtained plano lens was further annealed at 130°C for 2 hours. The obtained plano lens had a transparency and had a refractive index (ne) of 1.60, an Abbe number (ve) of 39, and a heat resistance of 129°C, and was suitable as a transparent resin for optical materials. The ultraviolet-visible light spectrum of the obtained plano lens was measured using a spectrophotometer UV-1600 (produced by Shimadzu Corp.). The evaluation results are shown in Table 2.

### [Example 8]

A 2 mm thick plano lens was obtained by the same method as Example 7 except that 1.5 parts by weight of the mixture (EVERSORB 109 produced by EVER LIGHT) of 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] propionate 2-ethyl hexyl was changed to 3.0 parts by weight. The obtained plano lens had a transparency and had a refractive index (ne) of 1.60, an Abbe number (ve) of 38, and a heat resistance of 124°C, and was suitable as a transparent resin for optical materials. The ultraviolet-visible light spectrum of the obtained plano lens was measured using a spectrophotometer UV-1600 (produced by Shimadzu Corp.). The evaluation results are shown in Table 2.

### [Example 9]

A 2 mm thick plano lens was obtained by the same method as Example 7 except that 1.5 parts by weight of the mixture (EVERSORB 109 produced by EVER LIGHT) of 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] propionate 2-ethyl hexyl was changed to 5.0 parts by weight. The obtained plano lens had a transparency and had a refractive index (ne) of 1.60, an Abbe number (ve) of 38, and a heat resistance of 120°C, and was suitable as a transparent resin for optical materials. The ultraviolet-visible light spectrum of the obtained plano lens was measured using a spectrophotometer UV-1600 (produced by Shimadzu Corp.). The evaluation results are shown in Table 2.

### [Example 10]

A homogeneous solution was obtained by stirring and mixing 0.1 parts by weight of ZelecUN (produced by STEPAN), 1.5 parts by weight of a mixture (EVERSORB 109 produced by EVER LIGHT) of 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] propionate 2-ethyl hexyl and 50.6 parts by weight of a mixture of 2,5-bis (isocyanatomethyl) bicyclo-[2.2.1]-heptane and 2,6-bis (isocyanatomethyl) bicyclo-[2.2.1]-heptane at 20°C. A mixed solution was obtained by adding 25.5 parts by weight of 4-mercaptomethyl-1,8-dimercapto-3,6-dithiaoctane, 23.9 parts by weight of pentaerythritol tetrakis (3-mercaptopropionate), 0.035 parts by weight of dibutyltin (II) dichloride to the above homogeneous solution, and mixing and stirring at 20°C. After this mixed solution was defoamed at 600 Pa for 1 hour and filtrated with a 1 um PTFE filter, the mixed solution was introduced into a mold formed of a 2C plano glass mold with a center thickness of 2 mm and a diameter of 80 mm and a flat glass mold with a center thickness of 2 mm and a diameter of 78 mm. This mold was placed in a polymerization oven and polymerization was carried out by gradually raising the temperature from 20°C to 130°C over 21 hours. After completion of the polymerization, the mold was removed from the oven. The obtained plano lens was further annealed at 130°C for 2 hours. The obtained plano lens had a transparency and had a refractive index (ne) of 1.60, an Abbe number (ve) of 39, and a heat resistance of 114°C, and was suitable as a transparent resin for optical materials. The ultraviolet-visible light spectrum of the obtained plano lens was measured using a spectrophotometer UV-1600 (produced by Shimadzu Corp.). The evaluation results are shown in Table 2.

### [Example 11]

A 2 mm thick plano lens was obtained by the same method as Example 10 except that 1.5 parts by weight of the mixture (EVERSORB 109 produced by EVER LIGHT) of 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] propionate 2-ethyl hexyl was changed to 3.0 parts by weight. The obtained plano lens had a transparency and had a refractive index (ne) of 1.60, an Abbe number (ve) of 39, and a heat resistance of 112°C, and was suitable as a transparent resin for optical materials. The ultraviolet-visible light spectrum of the obtained plano lens was measured using a spectrophotometer UV-1600 (produced by Shimadzu Corp.). The evaluation results are shown in Table 2.

### [Example 12]

A homogeneous solution was obtained by stirring and mixing 0.1 part by weight of ZelecUN (produced by STEPAN), 1.5 parts by weight of a mixture (EVERSORB 109 produced by EVER LIGHT) of 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] propionate 2-ethyl hexyl, 29.19 parts by weight of a mixture of 2,5-bis (isocyanatomethyl) bicyclo-[2.2.1]-heptane and 2,6-bis (isocyanatomethyl) bicyclo-[2.2.1]-heptane, and 19.48 parts by weight of 1,6-hexamethylene diisocyanate at 20°C. A mixed solution was obtained by adding 27.85 parts by weight of 4-mercaptomethyl-1,8-dimercapto-3,6-dithiaoctane, 23.48 parts by weight of pentaerythritol tetrakis (3-mercaptopropionate), and 0.04 parts by weight of dimethyltin (II) dichloride to the above homogeneous solution, and mixing and stirring at 20°C. After this mixed solution was defoamed at 600 Pa for 1 hour and filtrated with a 1 µm PTFE filter, the mixed solution was introduced into a mold formed of a 2C plano glass mold with a center thickness of 2 mm and a diameter of 80 mm and a flat glass mold with a center thickness of 2 mm and a diameter of 78 mm. This mold was placed in a polymerization oven and polymerization was carried out by gradually raising the temperature from 20°C to 130°C over 21 hours. After completion of the polymerization, the mold was removed from the oven. The obtained piano lens was further annealed at 130°C for 2 hours. The obtained plano lens had a transparency and had a refractive index (ne) of 1.60, an Abbe number (ve) of 39, and a heat resistance of 92°C, and was suitable as a transparent resin for optical materials. The ultraviolet-visible light spectrum of the obtained plano lens was measured using a spectrophotometer UV-1600 (produced by Shimadzu Corp.). The evaluation results are shown in Table 2.

### [Example 13]

A homogeneous solution was obtained by stirring and mixing 0.1 parts by weight of ZelecUN (produced by STEPAN), 1.5 parts by weight of a mixture (EVERSORB 109 produced by EVER LIGHT) of 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] propionate 2-ethyl hexyl, 24.15 parts by weight of 1,5-pentamethylene diisocyanate, and 28.15 parts by weight of a polyisocyanate which includes isocyanurate of 1,5-pentamethylene diisocyanate at 20°C. A mixed solution was obtained by adding 33.1 parts by weight of a mixture of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 14.65 parts by weight of pentaerythritol tetrakis (3-mercaptopropionate), 0.03 parts by weight of 1-benzyl-2-methylimidazole to the above homogeneous solution and mixing and stirring at 20°C. After this mixed solution was defoamed at 600 Pa for 1 hour and filtrated with a 1 µm PTFE filter, the mixed solution was introduced into a mold formed of a 2C plano glass mold with a center thickness of 2 mm and a diameter of 80 mm and a flat glass mold with a center thickness of 2 mm and a diameter of 78 mm. This mold was placed in a polymerization oven and polymerization was carried out by gradually raising the temperature from 20°C to 130°C over 21 hours. After completion of the polymerization, the mold was removed from the oven. The obtained piano lens was further annealed at 130°C for 2 hours. The obtained plano lens had a transparency and had a refractive index (ne) of 1.60, an Abbe number (ve) of 39, and a heat resistance of 85°C, and was suitable as a transparent resin for optical materials. The ultraviolet-visible light spectrum of the obtained plano lens was measured using a spectrophotometer UV-1600 (produced by Shimadzu Corp.). The evaluation results are shown in Table 2.

### [Comparative Example 1]

A homogeneous solution was obtained by stirring and mixing 0.1 parts by weight of ZelecUN (produced by STEPAN), 0.6 parts by weight of 2-(2-hydroxy-3-t-butyl-5-methylphenyl)-chlorobenzotriazole (TINUVIN 326 produced by BASF Corp.), and 58.9 parts by weight of bis (4-isocyanatocyclohexyl) methane at 20°C. A mixed solution was obtained by adding 41.1 parts by weight of a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane and 0.15 parts by weight of dibutyltin (II) dichloride to the above homogeneous solution and stirring and mixing at 20°C. After this mixed solution was defoamed at 600 Pa for 1 hour and filtrated with a 1 µm PTFE filter, the mixed solution was introduced into a mold. This mold was placed in a polymerization oven and polymerization was carried out by gradually raising the temperature from 20°C to 130°C over 21 hours. After completion of the polymerization, the mold was removed from the oven. The obtained plano lens was further annealed at 130°C for 2 hours. The obtained 2 mm plano lens had a transparency and had a refractive index (ne) of 1.60, an Abbe number (ve) of 40, and a heat resistance of 134°C. The ultraviolet-visible light spectrum of the obtained plano lens was measured using a spectrophotometer UV-1600 (produced by Shimadzu Corp.). The evaluation results are shown in Table 1.

### [Comparative Example 2]

A 2 mm thick plano lens was obtained by the same method as Comparative Example 1 except that 0.6 parts by weight of 2-(2-hydroxy-3-t-butyl-5-methylphenyl)-chlorobenzotriazole (TINUVIN 326 produced by BASF Corp.) was changed to 1.1 parts by weight. Here, when the dissolution completion time of the ultraviolet absorber was confirmed, the ultraviolet absorber took 100 minutes to completely dissolve. The obtained plano lens had a transparency, and had a refractive index (ne) of 1.60, an Abbe's number (ve) of 39, and a heat resistance of 134°C. The ultraviolet-visible light spectrum of the obtained plano lens was measured using a spectrophotometer UV-1600 (produced by Shimadzu Corp.). The evaluation results are shown in Table 1.

### [Comparative Example 3]

The experiment was carried out by the same method as Comparative Example 1 except that 0.6 parts by weight of 2-(2-hydroxy-3-t-butyl-5-methylphenyl)-chlorobenzotriazole (TINUVIN 326 produced by BASF Corp.) was changed to 1.2 parts by weight but the dissolution was not completed and the mixed solution was suspended. After defoaming and filtering in accordance with Comparative Example 1, the mixed solution was transparent. After this mixed solution was defoamed at 600 Pa for 1 hour and filtrated with a 1 µm PTFE filter, the mixed solution was introduced into a mold. At this time, the viscosity of the polymerizable composition increased and it was difficult to introduce the composition into the mold. This mold was placed in a polymerization oven and polymerization was carried out by gradually raising the temperature from 20°C to 130°C over 21 hours. After completion of the polymerization, the mold was removed from the oven. The obtained plano lens was further annealed at 130°C for 2 hours. The obtained 2 mm thick plano lens was cloudy and unsuitable as a transparent resin for optical materials.

**Table 1**

| Parts by weight | Example 1 | Example 2 | Example 3 | Example 4 | Example 5 | Example 6 | Comparat ive Example 1 | Comparat ive Example 2 | Comparat ive Example 3 |
|---|---|---|---|---|---|---|---|---|---|
| Isocyanat e compound | | | | | | | | | |
| a-1 | 58.9 | 58.9 | 58.9 | 58.9 | 58.9 | 58.9 | 58.9 | 58.9 | 58.9 |
| Active hydrogen compound | | | | | | | | | |
| b-1 | 41.1 | 41.1 | 41.1 | 41.1 | 41.1 | 41.1 | 41.1 | 41.1 | 41.1 |
| Ultraviol et absorber | | | | | | | | | |
| c-1 | 1.5 (15000) | 3.0 (30000) | 5.0 (50000) | 1.5 (15000) | 2.0 (20000) | 5.0 (50000) | - | - | - |
| c-2 | - | - | - | 0.6 (6000) | 0.6 (6000) | 0.6 (6000) | 0.6 (6000) | 1.1 (11000) | 1.2 (12000) |
| ZelecUN | 0.1 | 0.1 | 0.1 | 0.1 | 0.1 | 0.1 | 0.1 | 0.1 | 0.1 |
| Dibutylti n (II) dichlorid e | 0.15 | 0.15 | 0.15 | 0.15 | 0.15 | 0.15 | 0.15 | 0.15 | 0.15 |
| Dissoluti on Completio n Time (20°C) | 10min | 10min | 30min | 30min | 30min | 30min | 30min | 100min | Uncomple ted |
| Light transmiss ion rate: % | | | | | | | | | |
| 410nm | 1.3 | 0.1 | 0.1 | 0.1 | 0.1 | 0.1 | 0.3 | 0.1 | - |
| 420nm | 42.0 | 22.6 | 10.6 | 11.7 | 9.6 | 6.5 | 27.0 | 15.9 | - |
| 440nm | 87.7 | 86.4 | 84.8 | 83.9 | 83.5 | 82.8 | 86.4 | 85.9 | - |
| Transpare ncy | Transpar ent | Transpar ent | Transpar ent | Transpar ent | Transpar ent | Transpar ent | Transpar ent | Transpar ent | Not transpar ent |
| Refractiv e index (ne) | 1.60 | 1.60 | 1.60 | 1.60 | 1.60 | 1.60 | 1.60 | 1.60 | - |
| Abbe number (ve) | 39 | 39 | 39 | 39 | 39 | 39 | 40 | 39 | - |
| Heat resistanc e: Tg | 125 | 122 | 117 | 123 | 122 | 117 | 134 | 134 | - |

| | | | | | | | | | |
|---|---|---|---|---|---|---|---|---|---|
| In parentheses is the amount (ppm) of the ultraviolet absorber with respect to the total amount of the isocyanate compound and the active hydrogen compound. | | | | | | | | | |

**Table 2**

| Parts by weight | Example 7 | Example 8 | Example 9 | Example 10 | Example 11 | Example 12 | Example 13 |
|---|---|---|---|---|---|---|---|
| Isocyanate compound | | | | | | | |
| a-1 | | | | | | | |
| a-2 | 56.1 | 56.1 | 56.1 | | | | |
| a-3 | | | | 50.6 | 50.6 | 29.19 | |
| a-4 | | | | | | 19.48 | |
| a-5 | | | | | | | 24.15 |
| a-6 | | | | | | | 28.15 |
| Active hydrogen compound | | | | | | | |
| b-1 | | | | | | | 33.1 |
| b-2 | 43.9 | 43.9 | 43.9 | 25.5 | 25.5 | 27.85 | |
| b-3 | | | | 23.9 | 23.9 | 23.48 | 14.65 |
| Ultraviolet absorber | | | | | | | |
| c-1 | 1.5 (15000) | 3.0 (30000) | 5.0 (50000) | 1.5 (15000) | 3.0 (30000) | 1.5 (15000) | 1.5 (15000) |
| Dissolution Completion Time (20°C) | 10min | 10min | 30min | 10min | 10min | 10min | 10min |
| Light transmissio n rate: % | | | | | | | |
| 410nm | 0.1 | 0.1 | 0.1 | 0.3 | 0.1 | 0.1 | 0.3 |
| 420nm | 40.9 | 22.7 | 10.0 | 41.5 | 20.4 | 39.1 | 40.8 |
| 440nm | 87.3 | 85.5 | 84.9 | 87.3 | 85.4 | 82.9 | 84.2 |
| Transparenc y | Transparen t | Transparen t | Transparen t | Transparen t | Transparen t | Transparen t | Transparen t |
| Refractive index (ne) | 1.60 | 1.60 | 1.60 | 1.60 | 1.60 | 1.60 | 1.60 |
| Abbe number (ve) | 39 | 38 | 38 | 39 | 39 | 39 | 39 |
| Heat resistance: Tg | 129 | 124 | 120 | 114 | 112 | 92 | 85 |

| | | | | | | | |
|---|---|---|---|---|---|---|---|
| In parentheses is the amount (ppm) of the ultraviolet absorber with respect to the total amount of the isocyanate compound and the active hydrogen compound. | | | | | | | |

The isocyanate compound, active hydrogen compound, and ultraviolet absorber described in Table 1 and Table 2 are as follows.
a-1: bis (4-isocyanatocyclohexyl) methane
a-2: isophorone diisocyanate
a-3: a mixture of 2,5-bis (isocyanatomethyl) bicyclo-[2.2.1]-heptane and 2,6-bis (isocyanatomethyl) bicyclo-[2.2.1]-heptane
a-4: 1,6-hexamethylene diisocyanate
a-5: 1,5-pentamethylene diisocyanate
a-6: polyisocyanate which includes isocyanurate of 1,5-pentamethylene diisocyanate
b-1: a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane
b-2: 4-mercaptomethyl-1,8-dimercapto-3,6-dithiaoctane
b-3: pentaerythritol tetrakis (3-mercaptopropionate)
c-1: a mixture of 3-[3-tert-butyl-5-(5-chloro-2H-benzotriazol-2-yl)-4-hydroxypheny l] octyl propionate and 3-[3-tert-butyl-5-(5-chloro-2H-benzotriazol-2-yl)-4-hydroxypheny l] propionate 2-ethyl hexyl
c-2: 2-(2-hydroxy-3-t-butyl-5-methylphenyl)-chlorobenzotriazole

From Table 1 and Table 2, in each example, it is possible to quickly dissolve the ultraviolet absorber while the concentration of the ultraviolet absorber in the polymerizable composition was higher than the concentration in each comparative example, and each example was superior in product productivity.

In addition, the lenses obtained in each example have a transparent and excellent appearance, and are excellent in the balance between each characteristic of the characteristic of suppressing the transmission of light having a wavelength of 410 to 440 nm, the optical characteristics of a high refractive index and a high Abbe number, and heat resistance.

## Claims

1. A polymerizable composition for an optical material comprising:
(A) an isocyanate compound which is at least one type selected from the group consisting of hexamethylene diisocyanate, pentamethylene diisocyanate, xylylene diisocyanate, isophorone diisocyanate, bis (isocyanatomethyl) cyclohexane, bis (isocyanatocyclohexyl) methane, 2,5-bis (isocyanatomethyl) bicyclo-[2.2.1]-heptane, 2,6-bis (isocyanatomethyl) bicyclo-[2.2.1]-heptane, tolylene diisocyanate, phenylene diisocyanate, and 4,4'-diphenylmethane diisocyanate;
(B) an active hydrogen compound that is a polythiol compound which is at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis (2-mercaptoacetate), pentaerythritol tetrakis (3-mercaptopropionate), 2,5-bis (mercaptomethyl)-1,4-dithiane, bis (mercaptoethyl) sulfide, 1,1,3,3-tetrakis (mercaptomethylthio) propane, 4,6-bis (mercaptomethylthio)-1,3-dithiane, 2-(2,2-bis (mercaptomethylthio) ethyl)-1,3-dithietane, 1,1,2,2-tetrakis (mercaptomethylthio) ethane, 3-mercaptomethyl-1,5-dimercapto-2,4-dithiapentane, tris (mercaptomethylthio) methane, and ethylene glycol bis (3-mercaptopropionate); and
(C) one or more types of ultraviolet absorber represented by General Formula (1) below and having a maximum absorption peak in a range of equal to or more than 350 nm and equal to or less than 370 nm; 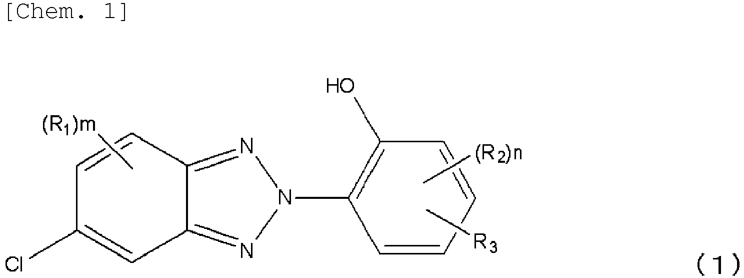 (in General Formula (1) above, R₁ and R₂ represent an alkyl group having 1 to 8 carbon atoms and may be same or different from each other, a plurality of R₁ present or a plurality of R₂ present may be same or different, m represents an integer of 0 to 3, n represents an integer of 0 to 3, and R₃ represents a functional group having 2 to 15 carbon atoms which includes an ester bond).

2. The polymerizable composition for an optical material according to claim 1,
wherein the ultraviolet absorber (C) is represented by General Formula (2) below and is one or more types of ultraviolet absorber having a maximum absorption peak in a range of equal to or more than 350 nm and equal to or less than 370 nm; 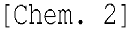 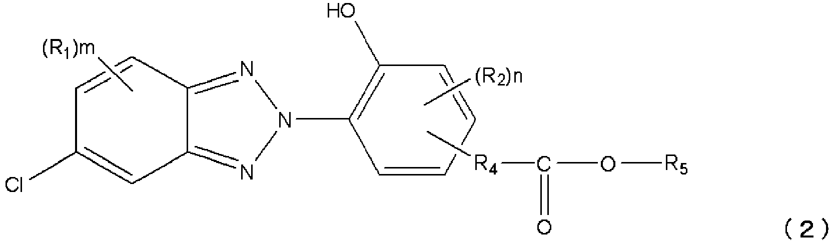 (in General Formula (2) above, R₁, R₂, m, and n have the same meanings as in General Formula (1), R₄ and R₅ independently represent a hydrocarbon group having 1 to 10 carbon atoms which may be branched) .

3. The polymerizable composition for an optical material according to claim 2,
wherein the ultraviolet absorber (C) is represented by General Formula (3) below and is one or more types of ultraviolet absorber having a maximum absorption peak in a range of equal to or more than 350 nm and equal to or less than 370 nm; 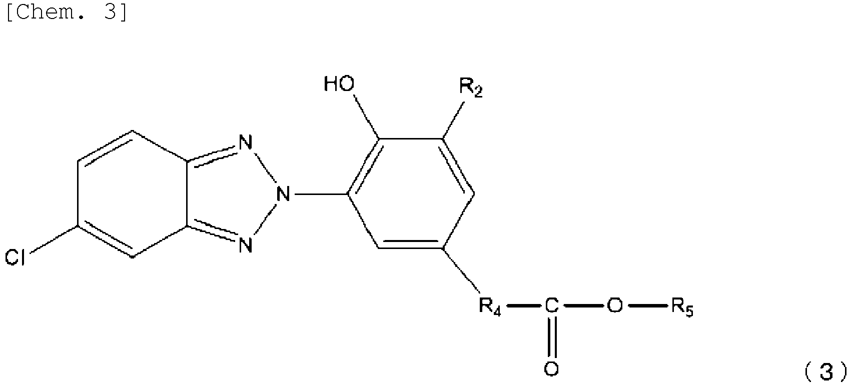 (in General Formula (3) above, R₂, R₄, and R₅ have the same meanings as in General Formula (1) or (2)).

4. The polymerizable composition for an optical material according to any one of claims 1 to 3,
wherein the isocyanate compound (A) includes an alicyclic isocyanate compound.

5. The polymerizable composition for an optical material according to any one of claims 1 to 4, further comprising:
an ultraviolet absorber having a structure other than the structure of General Formula (1) and having a maximum absorption peak in a range of equal to or more than 350 nm and equal to or less than 370 nm.

6. The polymerizable composition for an optical material according to any one of claims 1 to 5,
wherein the ultraviolet absorber (C) is included in an amount of 0.1 to 10.0% by weight in 100% by weight of the polymerizable composition for an optical material.

7. A molded article obtainable by curing the polymerizable composition for an optical material according to any one of claims 1 to 6.

8. The molded article according to claim 7 comprising 0.1 to 10.0% by weight of the ultraviolet absorber (C).

9. An optical material constituted of the molded article according to claim 7 or 8.

10. A plastic lens formed of the optical material according to claim 9.

11. A method for manufacturing an optical material, the method comprising:
a step of cast polymerizing the polymerizable composition for an optical material according to any one of claims 1 to 6.

12. Use of a molded article obtainable by heating and curing the polymerizable composition for an optical material according to any one of claims 1 to 6 as an optical material.

## Patentansprüche

1. Polymerisierbare Zusammensetzung für ein optisches Material, die Folgendes umfasst:
(A) eine Isocyanatverbindung, die zumindest eine Art, ausgewählt aus der aus Hexamethylendiisocyanat, Pentamethylendiisocyanat, Xylylendiisocyanat, Isophorondiisocyanat, Bis(isocyanatomethyl)cyclohexan, Bis(isocyanatocyclohexyl)methan, 2,5-Bis(isocyanatomethyl)bicyclo-[2.2.1]-heptan, 2,6-Bis(isocyanatomethyl)bicyclo-[2.2.1]-heptan, Tolylendiisocyanat, Phenylendiisocyanat und 4,4'-Diphenylmethandiisocyanat bestehenden Gruppe ist;
(B) eine aktive Wasserstoffverbindung, die eine Polythiolverbindung ist, die zumindest eine, ausgewählt aus der aus 5,7-Dimercaptomethyl-1,11-dimercapto-3,6,9-trithiaundecan, 4,7-Dimercaptomethyl-1,11-dimercapto-3,6,9-trithiaundecan, 4,8-Dimercaptomethyl-1,11-dimercapto-3,6,9-trithiaundecan, 4-Mercaptomethyl-1,8-dimercapto-3,6-dithiaoctan, Pentaerythrit-tetrakis(2-mercaptoacetat), Pentaerythrit-tetrakis(3-mercaptopropionat), 2,5-Bis-(mercaptomethyl)-1,4-dithian, Bis(mercaptoethyl)sulfid, 1,1,3,3-Tetrakis(mercaptomethyl-thio)propan, 4,6-Bis(mercaptomethylthio)-1,3-dithian, 2-(2,2-Bis(mercaptomethylthio)ethyl)-1,3-dithietan, 1,1,2,2-Tetrakis(mercaptomethylthio)ethan, 3-Mercaptomethyl-1,5-dimercapto-2,4-dithiapentan, Tris(mercaptomethylthio)methan und Ethylenglykolbis(3-mercapto-propionat) bestehenden Gruppe ist; und
(C) eine oder mehrere Arten von Ultraviolettabsorber, die durch die nachstehende allgemeine Formel (1) dargestellt sind und einen maximalen Absorptionspeak im Bereich von gleich oder mehr als 350 nm bis gleich oder weniger als 370 nm aufweisen; 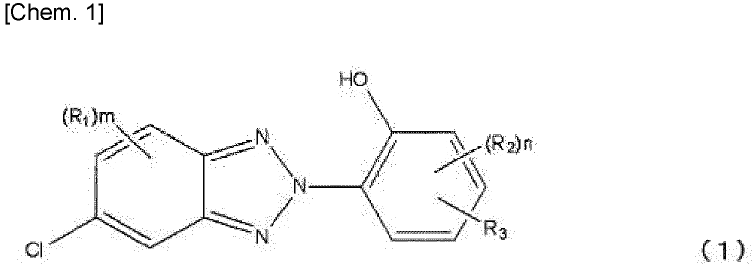 (wobei in der obigen allgemeinen Formel (1) R₁ und R₂ für eine Alkylgruppe mit 1 bis 8 Kohlenstoffatomen stehen und gleich oder unterschiedlich sein können, eine Vielzahl von vorhandenen R₁ oder eine Vielzahl von vorhandenen R₂ gleich oder unterschiedlich sein kann, m für eine ganze Zahl von 0 bis 3 steht, n für eine ganze Zahl von 0 bis 3 steht und R₃ für eine funktionelle Gruppe mit 2 bis 15 Kohlenstoffatomen steht, die eine Esterbindung umfasst).

2. Polymerisierbare Zusammensetzung für ein optisches Material nach Anspruch 1,
wobei der Ultraviolettabsorber (C) durch die nachstehende allgemeine Formel (2) dargestellt ist und eine oder mehrere Arten von Ultraviolettabsorber, die einen maximalen Absorptionspeak im Bereich von gleich oder mehr als 350 nm bis gleich oder weniger als 370 nm aufweisen, ist; 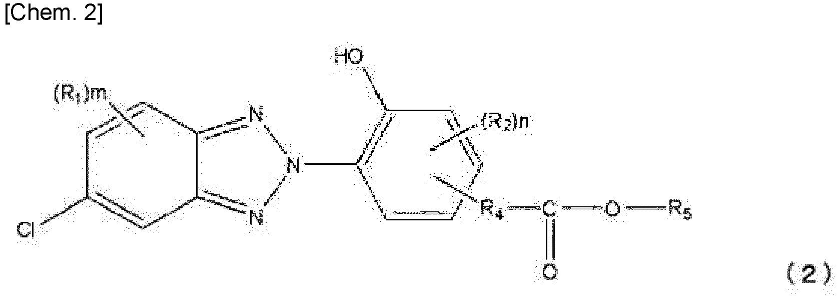 (wobei in der vorstehenden allgemeinen Formel (2) R₁, R₂, m und n die gleiche Bedeutung wie in der allgemeinen Formel (1) haben, R₄ und R₅ jeweils unabhängig voneinander für eine Kohlenwasserstoffgruppe mit 1 bis 10 Kohlenstoffatomen stehen, die gegebenenfalls verzweigt ist).

3. Polymerisierbare Zusammensetzung für ein optisches Material nach Anspruch 2,
wobei der Ultraviolettabsorber (C) durch die nachstehende allgemeine Formel (3) dargestellt ist und eine oder mehrere Arten von Ultraviolettabsorber, die einen maximalen Absorptionspeak im Bereich von gleich oder mehr als 350 nm bis gleich oder weniger als 370 nm aufweisen, ist; 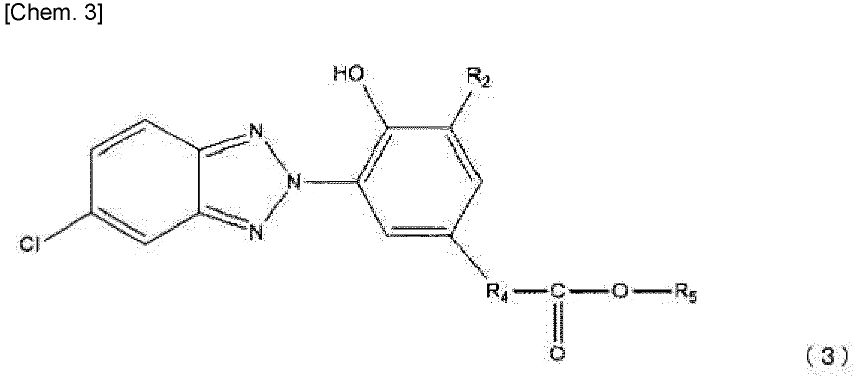 (wobei in der vorstehenden allgemeinen Formel (3) R₂, R₄ und R₅ die gleiche Bedeutung wie in der allgemeinen Formel (1) oder (2) haben).

4. Polymerisierbare Zusammensetzung für ein optisches Material nach einem der Ansprüche 1 bis 3,
wobei die Isocyanatverbindung (A) eine alizyklische Isocyanatverbindung umfasst.

5. Polymerisierbare Zusammensetzung für ein optisches Material nach einem der Ansprüche 1 bis 4, die weiters Folgendes umfasst.
einen Ultraviolettabsorber, der eine andere Struktur als die Struktur der allgemeinen Formel (1) und einen maximalen Absorptionspeak im Bereich von gleich oder mehr als 350 nm bis gleich oder weniger als 370 nm aufweist.

6. Polymerisierbare Zusammensetzung für ein optisches Material nach einem der Ansprüche 1 bis 5,
wobei der Ultraviolettabsorber (C) in einer Menge von 0,1 bis 10,0 Gew.-% in 100 Gew.-% der polymerisierbaren Zusammensetzung für ein optisches Material umfasst ist.

7. Formteil, das durch Härten einer polymerisierbaren Zusammensetzung für ein optisches Material nach einem der Ansprüche 1 bis 6 erhalten wird.

8. Formteil nach Anspruch 7, das 0,1 bis 10,0 Gew.-% des Ultraviolettabsorbers (C) umfasst.

9. Optisches Material, das aus einem Formteil nach Anspruch 7 oder 8 besteht.

10. Kunststofflinse, die aus einem optischen Material nach Anspruch 9 gebildet ist.

11. Verfahren zur Herstellung eines optischen Materials, wobei das Verfahren Folgendes umfasst:
einen Schritt des Gusspolymerisierens einer polymerisierbaren Zusammensetzung für ein optisches Material nach einem der Ansprüche 1 bis 6.

12. Verwendung eines Formteils, das durch Erhitzen und Härten einer polymerisierbaren Zusammensetzung für ein optisches Material nach einem der Ansprüche 1 bis 6 erhalten wird, als optisches Material.

## Revendications

1. Composition polymérisable pour un matériau optique, comprenant :
(A) un composé isocyanate qui est au moins un type choisi dans l'ensemble constitué par le diisocyanate d'hexaméthylène, le diisocyanate de pentaméthylène, le diisocyanate de xylylène, le diisocyanate d'isophorone, le bis(isocyanatométhyl)cyclohexane, le bis(isocyanatocyclohexyl)méthane, le 2,5-bis(isocyanatométhyl)bicyclo[2.2.1]heptane, le 2,6-bis(isocyanatométhyl)bicyclo[2.2.1]heptane, le diisocyanate de tolylène, le diisocyanate de phénylène, et le diisocyanate de 4,4'-diphénylméthane.
(B) un composé à hydrogène actif qui est un composé polythiol qui est au moins l'un choisi dans l'ensemble constitué par le 5,7-dimercaptométhyl-1,11-dimercapto-3,6,9-trithiaundécane, le 4,7-dimercaptométhyl-1,11-dimercapto-3,6,9-trithiaundécane, le 4,8-dimercaptométhyl-1,11-dimercapto-3,6,9-trithiaundécane, le 4-mercaptométhyl-1,8-dimercapto-3,6-dithiaoctane, le tétrakis(2-mercaptoacétate) de pentaérythritol, le tétrakis(3-mercaptopropionate) de pentaérythritol, le 2,5-bis(mercaptométhyl)-1,4-dithiane, le sulfure de bis(mercaptoéthyle), le 1,1,3,3-tétrakis(mercaptométhylthio)propane, le 4,6-bis(mercaptométhylthio)-1,3-dithiane, le 2-(2,2-bis(mercaptométhylthio)éthyl)-1,3-dithiétane, le 1,1,2,2-tétrakis(mercaptométhylthio)éthane, le 3-mercaptométhyl-1,5-dimercapto-2,4-dithiapentane, le tris(mercaptométhylthio)méthane, et le bis(3-mercaptopropionate) d'éthylèneglycol ; et
(C) un ou plusieurs types d'agents absorbant les ultraviolets représentés par la formule générale (1) ci-dessous et ayant un pic d'absorption maximale située dans la plage allant de 350 nm ou plus à 370 nm ou moins ; 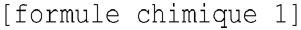 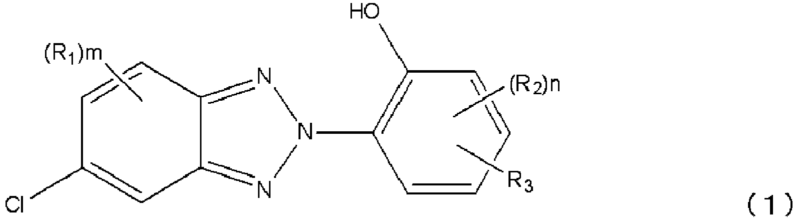 (dans la formule générale (1) ci-dessus, R₁ et R₂ représentent un groupe alkyle ayant 1 à 8 atomes de carbone et peuvent être identiques ou différents, plusieurs R₁ présents ou plusieurs R₂ présents peuvent être identiques ou différents, m représente un entier de 0 à 3, n représente un entier de 0 à 3, et R₃ représente un groupe fonctionnel ayant 2 à 15 atomes de carbone qui contient une liaison ester).

2. Composition polymérisable pour un matériau optique selon la revendication 1,
dans laquelle l'agent absorbant les ultraviolets (C) est représenté par la formule générale (2) ci-dessous et est un ou plusieurs types d'agents absorbant les ultraviolets ayant un pic d'absorption maximale situé dans la plage allant de 350 nm ou plus à 370 nm ou moins ; 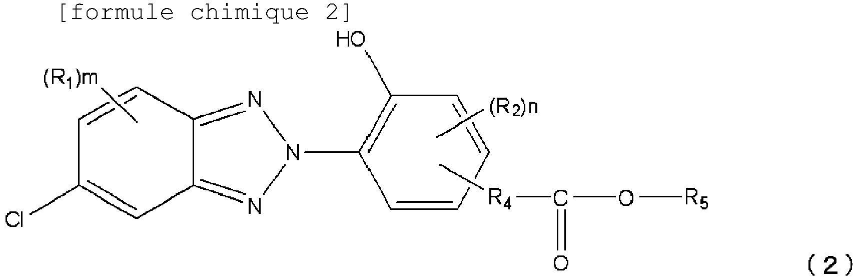
(dans la formule générale (2) ci-dessus, R₁, R₂, m et n ont les mêmes significations que dans la formule générale (1), R₄ et R₅ représentent indépendamment un groupe hydrocarboné ayant 1 à 10 atomes de carbone qui peut être ramifié).

3. Composition polymérisable pour un matériau optique selon la revendication 2,
dans laquelle l'agent absorbant les ultraviolets (C) est représenté par la formule générale (3) ci-dessous et est un ou plusieurs types d'agents absorbant les ultraviolets ayant un pic d'absorption maximale situé dans la plage allant de 350 nm ou plus à 370 nm ou moins ; 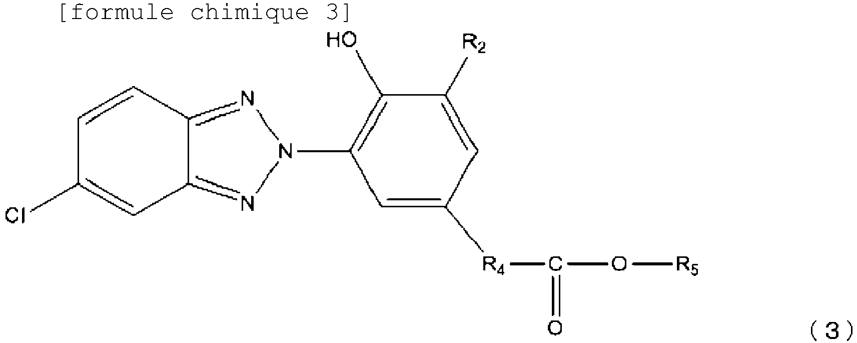
(dans la formule générale (3) ci-dessus, R₂, R₄ et R₅ ont les mêmes significations que dans la formule générale (1) ou (2) ).

4. Composition polymérisable pour un matériau optique selon l'une quelconque des revendications 1 à 3,
dans laquelle le composé isocyanate (A) englobe un composé isocyanate alicyclique.

5. Composition polymérisable pour un matériau optique selon l'une quelconque des revendications 1 à 4, comprenant en outre :
un agent absorbant les ultraviolets ayant une structure autre que la structure de formule générale (1) et ayant un pic d'absorption maximale situé dans la plage allant de 350 nm ou plus à 370 nm ou moins.

6. Composition polymérisable pour un matériau optique selon l'une quelconque des revendications 1 à 5,
dans laquelle l'agent absorbant les ultraviolets (C) est présent en une quantité de 0,1 à 10,0 % en poids pour 100 % en poids de la composition polymérisable pour un matériau optique.

7. Article moulé pouvant être obtenu par durcissement de la composition polymérisable pour un matériau optique selon l'une quelconque des revendications 1 à 6.

8. Article moulé selon la revendication 7, comprenant 0,1 à 10,0 % en poids de l'agent absorbant les ultraviolets (C) .

9. Matériau optique constitué de l'article moulé selon la revendication 7 ou 8.

10. Lentille plastique formée du matériau optique selon la revendication 9.

11. Procédé pour fabriquer un matériau optique, le procédé comprenant
une étape de polymérisation par coulée de la composition polymérisable pour un matériau optique selon l'une quelconque des revendications 1 à 6.

12. Utilisation d'un article moulé pouvant être obtenu par chauffage et durcissement de la composition polymérisable pour un matériau optique selon l'une quelconque des revendications 1 à 6 en tant que matériau optique.
